Europäisches Patentamt

European Patent Office

Office européen des brevets

(19)

(11) Publication number : **0 651 257 A1**

(12) **EUROPEAN PATENT APPLICATION**

(21) Application number : **94307822.0**

(22) Date of filing : **25.10.94**

(51) Int. Cl.⁶ : **G01P 3/56,** G06F 17/40

(30) Priority : **27.10.93 US 144291**

(43) Date of publication of application :
**03.05.95 Bulletin 95/18**

(84) Designated Contracting States :
**DE FR GB IT**

(71) Applicant : **ILLINOIS TOOL WORKS, INC.**
**3600 West Lake Avenue**
**Glenview, Illinois 60025-5811 (US)**

(72) Inventor : **Beebe, James C.**
**59 Picadilly Court**
**Kent, Ohio 44240 (US)**
Inventor : **Fasnacht, Glenn**
**16537 North White Oaks Drive**
**Strongsville, Ohio 44136 (US)**

(74) Representative : **Rackham, Stephen Neil**
**GILL JENNINGS & EVERY,**
**Broadgate House,**
**7 Eldon Street**
**London EC2M 7LH (GB)**

(54) **On-vehicle measurement of wheel rotation.**

(57) Time of occurrence of an event, such as completion of rotation of a body, is determined by generating in response to the sensed occurrence of the event, a signal having a parameter whose value varies according to a predetermined function of time from an initial value at an initial time correlated to the time of occurrence of the event. At a subsequent time later than the initial time, a subsequent value of the parameter is determined and the time of occurrence of the event is determined by subtracting from the subsequent time, an amount of time calculated substantially according to the function as elapsing between the initial value and the subsequent value. By determining the times of completions of their respective rotations in this manner, the relative rotational phase and/or relative rotational velocities of rotating bodies, such as tyre/ wheel assemblies of a moving vehicle, can be determined with precision.

FIG. 1

EP 0 651 257 A1

The invention relates to precise measurement of the times at which certain events, such as complete revolutions of wheels, take place and for measuring relative velocity and phase relationships based on those times. More particularly, the present invention relates to methods and apparatus well-suited for making such measurements on-board a moving vehicle.

The wheels of automobiles or other vehicles equipped with pneumatic tyres do not always rotate in phase with one another nor do they necessarily rotate the same angular velocity as one another at any given time. Large differences in phase and angular velocity among the wheels of a vehicle can arise due to external factors such as reduced traction caused by acceleration, braking or changes in steer direction of the vehicle. Less dramatic but still significant differences in those parameters, even with respect to wheels on the same axle, are also known to occur as an automobile travels in a straight ahead direction without braking or accelerating. These can arise due to a number of influences such as the operational characteristics of the differential of the vehicle, structural non-uniformities in the tyres, variances in effective rolling radii among the tyre/wheel assemblies or uneven distribution of the weight of the vehicle. In order to study these influences as well as to measure on a vehicle the effective radius or other parameters characterizing its tyre/wheel assemblies, it is important to be able to determine with precision when an event, such as completion of a full revolution of wheel rotation, occurs.

U.S. Patent 4,479,382 to Greenhorn et al. discloses a micro-processor based system for measuring the average effective rolling radius of a tyre on a tyre uniformity test machine and suggests that such measurements are useful for predicting the tendency of a vehicle to exhibit an undesirable and potentially dangerous handling condition known as torque steer. In that system, a photo-sensitive detector and a tachometer are used to provide the microprocessor with respective series of angularly spaced pulses as a load wheel and tyre rotate in contact with one another under a radial load. Under such load, the tyre deforms as it would under the weight of a vehicle while the load wheel, being rigid, maintains its normal fixed radius.

To measure average effective rolling radius according to Greenhorn et al. '382, the tyre and load wheel are first brought up to a desired rotational speed while under a radial load. The micro-processor counts the number of pulses delivered by the load wheel detector during a series of tachometer pulses corresponding in number to four complete revolutions of the tyre. The internal clock of the micro-processor measures the time elapsed during each respective pulse series. To compute the average effective rolling radius of the tyre, the micro-processor multiplies the radius of the load wheel by the ratio of total number of load wheel pulses counted to tyre pulses counted over the four tyre revolutions and also by the ratio of the total time duration of the tyre pulse series to that of the load wheel pulse series. Multiplication by the latter ratio reduces measurement error which would otherwise result from any difference in phase between the two series of pulses.

While the apparatus and method of Greenhorn et al. '382 may afford measurements of average effective rolling radius with reasonable accuracy over several revolutions of a tyre, it does not provide an apparatus or method capable of determining the time of occurrence of an event, such as completion of a single wheel rotation, with high precision. Rather, averaging over several revolutions is essential to accuracy. The Greenhorn et al. '382 system is also limited to use in connection with a tyre uniformity testing machine having a load wheel and provides no way of making measurements aboard a moving vehicle. This precludes accurate measurement of the characteristics of tyres and/or other vehicle components under actual operating conditions, much less measurement of phase and/or angular velocity relationships among tyre/wheel assemblies on the same moving vehicle.

In order to use a digital computer to accurately determine the time at which an event, such as completion of a full revolution of a wheel, takes place, it has been known in the prior art to equip the computer with a dedicated high speed timing board such as the DT2819 available from Data Translation, Inc. of Marlboro, Massachusetts. That device includes five, sixteen bit counters operable at one of several user-selectable frequencies extending to 5 MHz and can be used to generate precisely timed interrupts on the bus of an IBM-compatible personal computer. By vectoring such interrupts to a routine for sampling data appearing at an input of an analog-to-digital (A/D) conversion board resident in an expansion port of the computer data can be sampled at intervals which are periodic to a high degree of accuracy. However, not all computers, particularly small, battery powered laptop types most suitable for making measurements on-board a moving vehicle have expansion capability to accommodate such a high speed timing board in addition to the necessary A/D conversion board.

According to this invention, a method for determining the time of occurrence of an event comprises the steps of:

(a) generating, in response to occurrence of the event, a signal having a parameter whose value varies as a function of time, said signal having an initial value at an initial time;

(b) determining a subsequent value of said parameter at a subsequent time, said subsequent time being a time after said initial time, and

(c) subtracting from said subsequent time, an amount of time calculated substantially according to said function as elapsing between said initial value and said subsequent value to determine the time of said occurrence.

The invention also embraces means for performing such a method.

In accordance with a preferred embodiment of the invention, a photo-detector or other transducer suitable for sensing an event whose time of occurrence is to be measured communicates with a function generator to generate a signal having a parameter, such as voltage magnitude, whose value varies as a function of time from some initial value at an initial time. Preferably, the initial time is substantially simultaneous with occurrence of the event. At a time subsequent to the initial time, the value of the parameter is measured. To accurately determine the time of occurrence of the event, a computer subtracts from the subsequent time, an amount of time, determined substantially according to the time function, as elapsing between the initial and subsequent values of the parameter. In a preferred embodiment, the function comprises a linear function of time having a slope, S, so that the time, T, at which the event occurred prior to the subsequent time is determined substantially in accordance with the equation:

$$T = T_s - [(V_s - V_i)/S]$$

where $T_s$ represents the subsequent time, $V_s$ represents the value of the parameter at the subsequent time and $V_i$ represents the initial value of the parameter. For simplicity, $V_i$ is preferably selected as zero by providing the function as one having an initial value of zero. In the preferred embodiment, this is achieved by providing the function as a voltage ramp commencing at an initial value of zero volts just as of the time the signal from the transducer indicates that a wheel rotation has been completed. For best accuracy, any time delay between occurrence of the event and the initial time marking onset of the function is corrected for by subtracting the length of such delay from the computed value T.

In cases where it is desirable to measure the time of occurrence of an event with respect to a reference time prior to the event, a further embodiment of the invention contemplates generating a periodic signal defining a plurality of successive sampling periods, the first of which commences at the reference time. Thereafter, in response to a sensed occurrence of the event, a signal having a parameter whose value varies as a predetermined function of time is generated beginning at an initial value, preferably zero, at an initial time which preferably corresponds to the time occurrence of the event is sensed. The value of the function is sampled at a subsequent time corresponding to the conclusion of one of the sampling periods. The elapsed time between the reference time and the subsequent time is then determined based on the number of sampling periods occurring between the reference time. To accurately determine the time of occurrence of the event with respect to the reference time, an amount of time calculated substantially according to the function as elapsing between the subsequent time and the initial time is then subtracted from the elapsed time. If any significant time delay exists between occurrence of the event and the initial time, such time delay is also preferably subtracted.

According to yet another embodiment of the invention, the TRANSMIT READY (TXRDY) flag of a universal asynchronous receiver/transmitter (UART) associated with the serial output port of a digital computer is used to provide a signal periodic to a high degree of precision by repetitively writing a character to the HOLD register of the UART at least once during the interval required for emptying the output shift register of the UART. Because the output shift register empties itself of a character bit-by-bit at a rate determined to a high degree of accuracy by the master clock which runs the CPU the output shift register will empty at periodic intervals. When the output shift register is empty, a "transmit ready" (TXRDY) flag is automatically set. Consequently, the TXRDY flag of the UART will undergo transitions in its logical state at intervals which are periodic and which can be used to initiate periodic sampling of data. By initiating reading the output of an A/D board coupled to the function generation each time the TXRDY pin of the UART is set, the time-variant signal produced by the function generator can be sampled at intervals which are precisely periodic without need of a separate high speed timing board, thus making it possible to acquire sampled data using a laptop computer having only a single expansion slot. This can be achieved solely through software by initiating data acquisition in response to the status of the TXRDY flag. Alternatively, in systems where a TXRDY pin is accessible, the TXRDY pin of the serial port UART can be hardwired to the hardwire interrupt pin of the CPU to generate periodic interrupt signals which can be vectored to a routine for reading an A/D conversion board such as the one coupled to the function generator. According to yet another embodiment of the invention, accurate measurements of the times of rotations of two or more of its tyres are used to determine the relative rotational phases of those tyres and/or their relative angular velocity over any complete revolution of interest under actual driving conditions.

A preferred embodiment of the invention will now be described with reference to the accompanying drawings in which like reference numerals designate like items, and in which:-

Fig. 1 is a simplified schematic block diagram illustrating a preferred embodiment of the apparatus of the invention installed aboard an automobile;

Fig. 2 is an electronic schematic diagram illustrating a preferred embodiment of the function generator of Fig. 1 in further detail;

Fig. 3 is a flow chart illustrating a periodic sampling technique according to the invention; and

Fig. 4 is a timing diagram illustrating the invention.

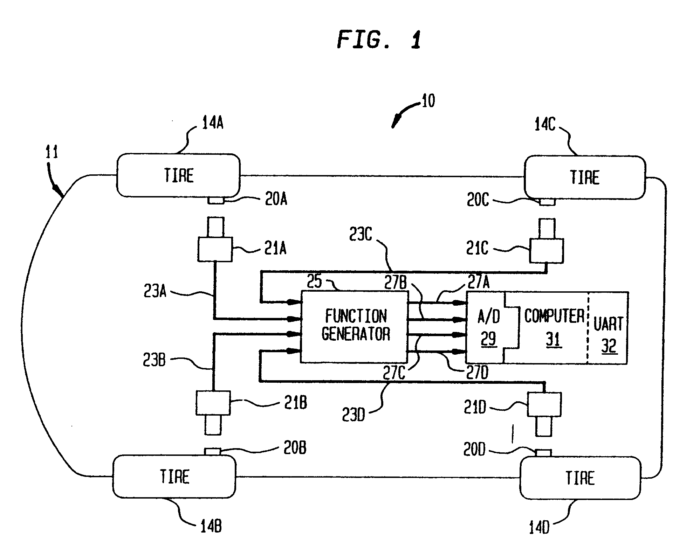

Fig. 1 is a simplified block diagram illustrating a preferred embodiment of the apparatus 10 of the invention installed aboard a vehicle 11, such as an automobile having four pneumatic tyres 14A, 14B, 14C and 14D. It is to be understood that automobile 11 and its tyres 14A through 14D merely serve as an environment for use of the invention and do not themselves comprise parts of the apparatus of the invention. The embodiment of Fig. 1 includes four identical channels designated by alphabetical suffixes a through d, one of which channels corresponds to each tyre 14A-14D. In order to permit completion of rotations thereof to be sensed, each tyre 14A-14D is fitted with a corresponding strip 20A, 20B, 20C, 20D of reflective adhesive-backed tape at a location in sensing relation to a respective high speed retro-reflective photo-eye 21A, 21B, 21C, 21D or other transducer suitable for sensing the event whose time of occurrence is to be determined. Tape strips 20A-20D may suitably comprise a type such as Scotch-Lite (trade mark) 3870 available from 3M Company of Minneapolis, Minnesota or equivalent. Photo-eyes 21 may suitably comprise the model VSD-FI available from Tri-Tronics Co., Inc. of Tampa, Florida or equivalent. Each photo-eye 21A-21D generates a pulse signal on a respective one of a plurality of lines 23A, 23B, 23C and 23D when a corresponding one of tape strips 20A through 20D moves past that photo-eye as a respective one of wheels 14A-14D rotates. Each photo-eye 21A-21D is preferably mounted rigidly to an unsprung portion of the suspension of vehicle 11 so as to limit motion between the photo-eye and its respective tyre 14A-14D as nearly as practicable, to that due to normal rotation of tyres 14A-14D.

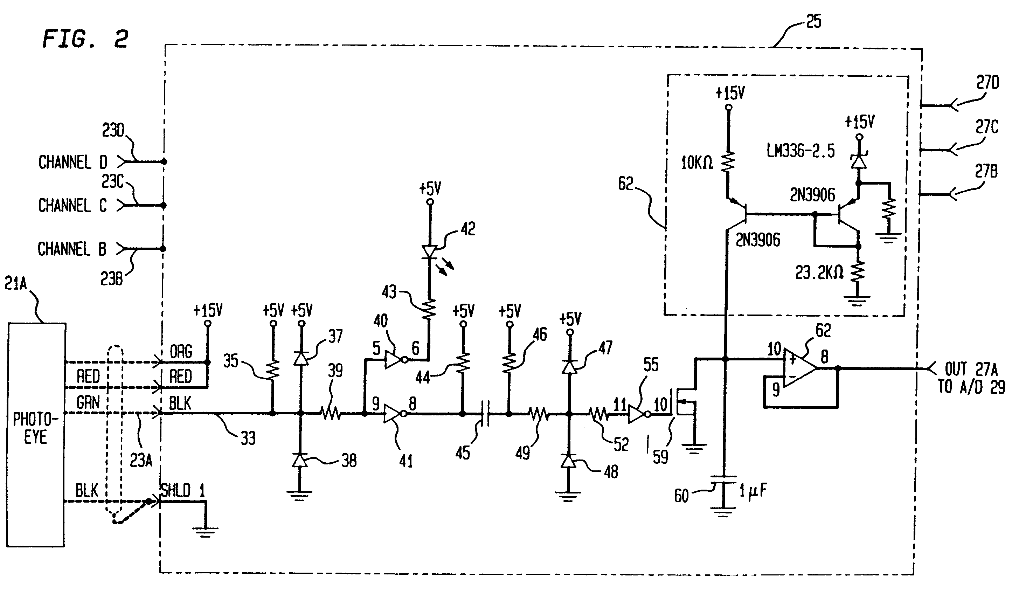

Lines 23A through 23C are applied as inputs to a four channel function generator 25 whose structure and operation will be described in further detail below with reference to Fig. 2. For the present, it is sufficient to note that function generator 25 includes four output lines 27A, 27B, 27C and 27D. Function generator 25 operates to generate time-variant signals on each of lines 27A, 27B, 27C and 27D. Those signals have a parameter, preferably voltage, which varies as a predetermined function of time from some initial value, preferably zero, at an initial time. Preferably this initial time is substantially simultaneous with occurrence of each complete rotation as sensed by each photo-eye 21. In the preferred embodiment, this time-variant function takes the form of a linear voltage ramp waveform of constant slope, S, which commences when each photo-detector 21A-21D senses complete rotation of one of tyres 14A-14D and thereafter increases in voltage at rate S until a maximum value is reached. While the preferred embodiment uses a linear time variant function for convenience of implementation and computational efficiency, those skilled in the art will recognize that any predetermined time function whose value corresponds uniquely to time over the range of interest can be used consistently with the broad aspects of the invention.

Lines 27A-27C are, in turn, applied to analog inputs of a multi-channel analog-to-digital (A/D) converter 29 which may suitably comprise a 12-bit, model DT-2814 available from Data Translation of Marlboro, Massachusetts or equivalent. A/D converter 29 is installed in the expansion slot of a digital computer 31 which may suitably comprise a model 320 laptop computer available from Dell Computer Corp. of Austin, Texas or equivalent having internal program memory as well as data memory. Computer 31 is preferably one including a serial output port controlled by a universal asynchronous receiver/transmitter (UART) 32 and is programmed as will be further explained hereinafter to measure the time of occurrence of each complete rotation of tyres 14A through 14D occurs and/or to determine the relative rotational phase and/or relative angular velocity of any one of tyres 14A through 14D with respect to one another during any revolution of interest.

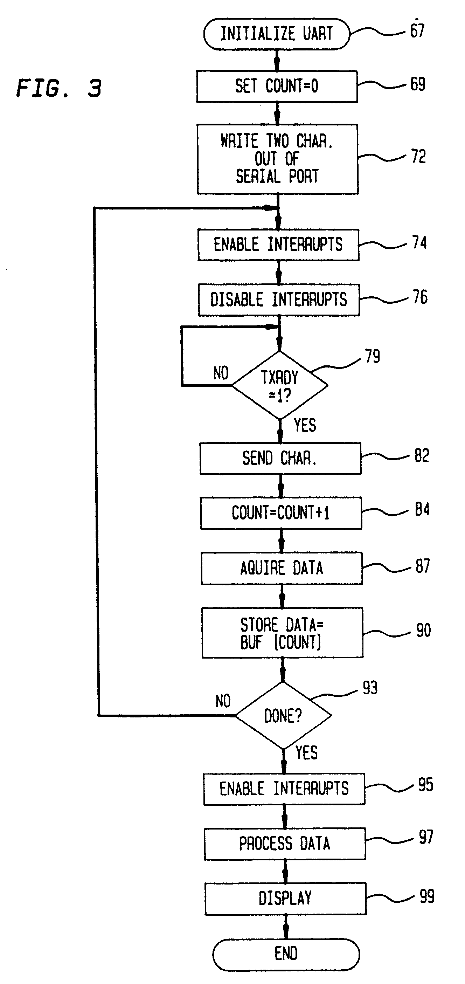

Function generator 25 comprises four identical channels, one of which is illustrated in detail in Fig. 2 which will now be described. Each channel of function generator 25 includes an input line 33 coupled to a respective one of lines 23A, 23B, 23C or 23D. When a photo-eye 20A-20D detects passage of a corresponding tape strip 21A-21D upon rotation of a corresponding one of tyres 14A through 14D, a negative-going pulse is applied to line 33 which is otherwise pulled up by a 30 kilohm resistor 35. That pulse signal is clipped by a pair of diodes 37 and 38 and is applied through a 10 kilohm resistor 39 to the inputs of a pair of inverters 40, 41 each of which preferably comprises one fourth of a type 74HC14 quad inverter integrated circuit. Inverter 40 drives a light-emitting diode (LED) 42 through a 330 ohm resistor 43 to provide for convenient visual verification of the presence of incoming pulses. The output of inverter 41 is pulled up to the +5 volt supply through a 14.3 kilohm resistor 44 and is applied to a differentiator comprised of a 0.005 microfarad capacitor 45 and a 14.3 kilohm resistor 46. The differentiated pulse signal is then passed to a pair of diodes 47 and 48 through a 10 kilohm resistor 49. Diodes 47 and 48 clip off the spike corresponding to the trailing edge of the incoming pulse. The spike corresponding to the leading edge of the pulse is passed through a 10 kilohm resistor 52 to a third inverter 55 which also preferably comprises one fourth of a type 74HC14 quad inverter integrated circuit. Inverter 55 produces a rectangular pulse which is used to briefly switch a type 2N7000 field effect transistor (FET) 59 into conduction to remove through a low impedance path any charge then remaining on a 1.0 micro-farad capacitor 60. When the brief pulse produced by inverter 55 ends, FET 59 switches off. At that time, which shall be referred to herein as an "initial time" or $T_{init}$ capacitor 60 begins to charge from an initial value of zero volts under the control of a constant current source 62 configured as shown. While FET 59 remains in a non-conductive state, constant current source 62 charges capacitor 60 such that the voltage on capacitor 60 increases linearly at a constant slope. A slope of 0.25 volts per millisecond is used in the preferred embodiment. The voltage on capacitor 60 is buffered by a voltage follower 62 which may conveniently be formed of one fourth of a type OP-471 quad operational amplifier integrated circuit. The output of voltage follower 62 is connected to an analog input such as input 27A of A/D converter 29. Each output 27A-27D of function generator 25 is applied to a corresponding input channel of the A/D converter 29 resident in the expansion slot of computer 31. A/D converter 29 operates to convert the analog signals appearing on lines 27A-27D to digital form for sampling by computer 31 under program control in a manner which will now be described with reference to the flow chart of Fig. 3.

In a first step 67, the universal asynchronous receiver/transmitter (UART) 32 controlling the serial port of computer 31 is initialized. UART 32 is configured to transmit digital characters at the precise rate of twelve hundred (1200) bits per second under the control of a master clock governed by a crystal oscillator. Each serial character consists of a total of twelve (12) bits including eight (8) data bits, one (1) parity bit, one (1) start bit and (2) two stop bits. At the rate of twelve-hundred (1200) baud, the UART transmits a single character in exactly ten (10) milliseconds. In a step 69, a COUNT register is cleared. The value of this register, as will be seen shortly, is used to provide an index value so that sampled data can be stored in the data memory of computer 31 in an indexed array. The value of the COUNT register also indicates when the data memory of computer 31 is full and data acquisition complete. In a step 72, the central processing unit of computer 31 causes two arbitrary characters to be written in succession to the serial port UART 32. These two characters are written less than ten (10) milliseconds apart.

The transmit section of UART 3-2 comprises a HOLD register and an output shift register. When the output shift register of UART 32 is loaded with a character, the bits of that character are shifted out onto the serial port, one bit at a time at precisely the rate of twelve-hundred (1200) baud. As soon as the output shift register of UART 32 empties, the internal control circuitry associated with UART 32 sets a "transmit ready" (TXRDY) flag and the contents, if any, of the HOLD register are transferred to the output shift register. The character then immediately begins to clock out of the output shift register onto the serial port one bit at a time at regular intervals determined by the baud rate. Thus, by sending two characters to UART 32 in rapid succession, step 72 provides an initial filling of the HOLD register and the output shift register. In a subsequent step 74, the program enables interrupts to the processor permitting any interrupts pending at that time to be serviced. Since ten (10) milliseconds are required to empty the output shift register of UART 32, all interrupts pending as of the initiation of step 74 are completed before the output shift register of the UART empties for the first time. Thus, other tasks are permitted to run while data acquisition is in progress.

Once any interrupts pending in step 74 have been serviced, interrupts are next immediately disabled in a step 76 to prevent the possibility of the output shift register emptying completely without immediately being replenished with a new character from the HOLD register. Immediately after disabling the interrupts in step 76, a tight polling loop is entered at step 79. No steps are performed between step 76 and step 79. In step 79, the TXRDY status flag of the output shift register of UART 32 is continuously monitored. As soon as that flag is set, indicating emptying of the output shift register, the character previously present in the HOLD register is automatically transferred in parallel fashion to the output shift register, leaving the HOLD register momentarily empty. Before the output shift register empties again, a new arbitrary character is written to the HOLD register in a step 82. The COUNT register is then indexed in step 84 and program flow is vectored in step 87 to a routine for acquiring data in which the four digital outputs of A/D converter 29 corresponding to analog lines 27A, 27B, 27C and 27D from function generator 25 are sampled sequentially. In step 90, all data acquired in step 87 is stored in the data memory of computer 31 in an array indexed according to the present value of the COUNT register. At step 93 the value of the COUNT register is compared with a maximum value indicating data acquisition is to be completed. If that maximum value has not been reached, program flow loops back to step 74 whereupon additional data samples are acquired and retrievably stored in memory. Once that maximum value has been reached, data acquisition is complete and an audible and/or visual indication is preferably generated by computer 31. In step 95 interrupts are again enabled. This permits the stored data to be processed as indicated in step 97 in a manner to be more fully explained below. The results may then be printed and/or displayed graphically or numerically or otherwise utilized as desired in a step 99.

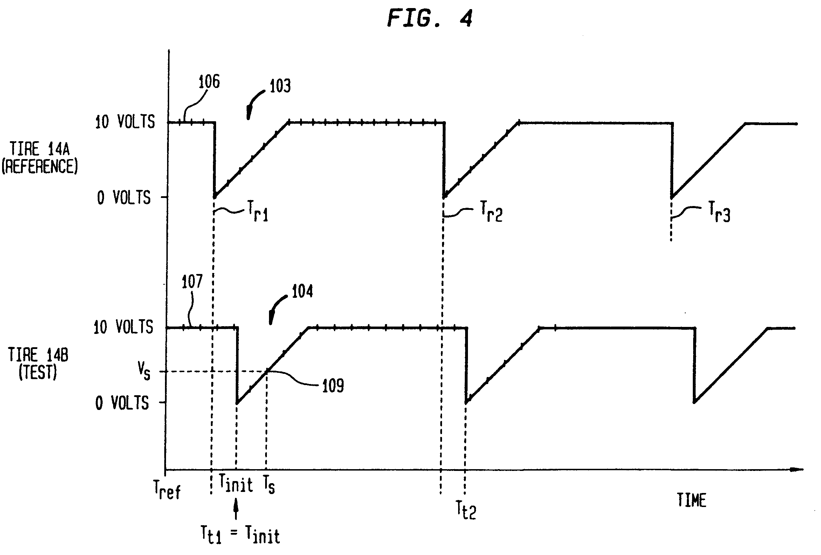

Fig. 4 is a timing diagram illustrating waveforms 103 and 104 generated by function generator 25 on lines 27A and 27B in response to rotation of tyres 14A and 14B, respectively. When the photo-eyes 21a and 21b associated with tyres 14A and 14B detect the leading edge of its tape strips 20A and 20B, respectively, the voltages on the corresponding lines 27A, 27B drop substantially instantaneously from a maximum value to a predetermined initial value, $V_i$, such as zero volts as illustrated. Thereafter, the voltage increases according to a predetermined time-variant function, such as the aforementioned linear function of 0.25 volts per millisecond slope, until a maximum value such as ten (10) volts is reached. That maximum value is maintained until the next subsequent rotation is completed at which time the voltage again drops to zero in response to the discharge of capacitor 60 as explained above with reference to Fig. 2. The channels associated with tyres 14C and 14D operate in the same way but are not depicted in Fig. 4 for simplicity of illustration.

In order to determine the time of occurrence of an event such as completion of a rotation of tyre 14B, the invention contemplates generating a signal, such as that of waveform 104 having a parameter, such as voltage magnitude, which varies as a function of time, from a predetermined initial value, $V_i$, at an initial time, $T_{init}$ which preferably corresponds to the time of occurrence of the event. As can be seen with reference to waveform 104 of Fig. 4, such an initial time, $T_{init}$, and initial value $V_i$ are defined by a zero voltage point. Computer 31 samples the waveforms 103 and 104, at successive periodic intervals 106, 107 in the manner explained above with reference to Fig. 3. Preferably, two or more data samples are acquired during transition of the time variant function from its initial value to its upper range value so as to satisfy the relation:

Sample rate > (2 ∗ SLOPE)/RANGE
where:

RANGE represents the range of the time variant function and SLOPE represents its slope where a linear time-variant function is used. The slope of the function and its range are also preferably selected with reference to the maximum speed at which vehicle 11 will travel under test according to the following relation:

Max. Vehicle Speed (miles/hour) < 2.142 ∗ Tyre Diameter (feet) ∗ SLOPE (volts/sec) / RANGE (volts)

Assuming a tyre diameter of three (3) feet ( 1 m), a slope of two hundred fifty (250) volts per second and a voltage range of ten (10) volts, test vehicle 11 may travel at speeds up to about one hundred sixty miles per hour (160 mph) (250 km/h) while using the preferred embodiment.

To determine the time, $T_{init}$, of occurrence of the rotation of tyre 14B with respect to a subsequent sample time, $T_s$, computer 31 uses the data stored in memory to subtract from the subsequent time, $T_s$, an amount of time calculated substantially in accordance with the time-variant function as elapsing between $T_s$ and $T_{init}$. Where the time variant function is a linear one, this can readily be accomplished by solving the equation:

$$T_{init} = T_s - [(V_s - V_i)/S]$$

where $T_s$ represents the subsequent time at which the data sample 109 was taken; $V_s$ represents the sampled value of the time variant function at time, $T_s$; S represents the slope of the linear time-variant function, and $V_i$ represents the initial value of the time-variant function of time $T_{init}$. For simplicity of computation, $V_i$ is always zero in the preferred embodiment since capacitor 60 discharges to ground potential. It should be noted with reference to Fig. 4 that the data sample 109 used as the basis of the above computation is not the sample immediately following $T_{init}$. For best accuracy, computer 31 discards any data sample smaller than the previous one and instead uses the larger sample next occurring. This improves accuracy by avoiding the possibility of basing a calculation on a very short portion of the span of the time variant function.

In order to determine the time of occurrence of completion of a rotation of a tyre, such as tyre 14B with respect to a prior reference time, $T_{ref}$, the invention contemplates determining the elapsed time between the reference time and the subsequent time, $T_s - T_{ref}$, based on the number of sampling periods 107 occurring therebetween. In any case where the sampling periods happen to be of one desired time unit in duration, this can be done simply by inspecting the value of the COUNT register under which the data value, $V_s$ read at time $T_s$ is stored in memory and subtracting from that elapsed time, the amount of time $T_s$-$T_{init}$, calculated according to the time variant function in the manner described above. Where the sampling periods are not one time unit in length, the value of the COUNT register must be multiplied by the actual duration of each sampling period to determine the elapsed time between $T_{ref}$ and $T_s$ before the amount of time elapsing between $T_s$ and $T_{init}$ is subtracted by computer 31. In this way, the time between reference time $T_{ref}$ and the completion of a tyre rotation at $T_{init}$ is precisely determined.

In situations where more than a negligible time delay may elapse between occurrence of the event being timed and time $T_{init}$ at which the initial value of the time variant function is determined, that time delay is preferably measured and subtracted by computer 31 from the time determined in the manner described above. Such time delay may be due for example to response time limitations imposed by the photo-eyes 21A-21D and/or delays inherent in the operation of function generator 25.

While determining the precise time of occurrence of an event, such as completion of a tyre rotation, is of itself useful for a wide variety of applications, such information can be used according to further aspects of the invention to determine the relative rotational phase and/or the relative angular velocity of any one of tyres 14A through 14D with respect to another one of those tyres when vehicle 11 is actually driven under such test conditions as may be desired. According to these aspects of the invention, computer 31 acquires tyre rotation data while vehicle 11 is driven under desired test conditions and the times of successive rotations of two or more of tyres 14A-14D with respect to a reference time are determined in the manner already described and retrievably stored in the memory of computer 31.

In order to determine the relative rotational phase of a test tyre, such as tyre 14A, with respect to a reference tyre, such as tyre 14B, computer 31 operates as described above to determine and store the times $T_{r1}$ and $T_{r2}$ of successive rotations of the reference tyre as illustrated in Fig. 4. This is done in the same manner that $T_{init}$ was determined as described above. Computer 31 also determines and stores the time $T_{t1}$ of completion of a rotation of the test tyre 14B occurring between $T_{r1}$ and $T_{r2}$. Based on that information, computer 31 then determines the phase (in radians) of the test tyre 14B with respect to the reference tyre 14A, i.e., $\phi_{tr}$, over the rotation between $T_{r1}$ and $T_{r2}$. This is done by solving the equation:

$$\phi_{tr1,2} = 2\pi \frac{(T_{t1} - T_{r1})}{(T_{r2} - T_{r1})}$$

Similarly, the phase (in radians) of test tyre 14A with respect to reference tyre 14A over the next subsequent rotation of tyre 14A depicted in Fig. 4 can be determined as:

$$\phi_{tr2,3} = 2\pi \frac{(T_{t2} - T_{r2})}{(T_{r3} - T_{r2})}$$

Thus, it can be appreciated that the relative phase of any one of tyres 14A through 14D with respect to another one of those tyres can readily be determined by computer 31 and the results stored in memory and printed and/or displayed graphically or numerically for studying the behaviour of tyres 14A-14D and/or other components of the test vehicle 11.

Using relative phase and rotation time values determined in the manner just described, the apparatus 10 and method of the invention also provide for determining the relative angular velocity between any two of tyres 14A-14D. This is achieved by determining the change in relative rotational phase between an arbitrarily designated test tyre and an arbitrarily designated reference tyre and dividing that phase change by the time interval over which the phase change occurred. For example, the angular velocity, $\omega_{tr}$ (in radians per second) between tyre 14A and tyre 14B over the rotation of test tyre 14B occurring between $T_{t1}$ and $T_{t2}$ is computed by computer 31 as follows:

$$\omega_{tr} = \frac{(\phi_{tr2,3} - \phi_{tr1,2})}{(T_{t2} - T_{t1})}$$

In a similar fashion, the invention can be used to determine relative rotational velocity between any two of tyres 14A-14D over any single revolution of interest.

## Claims

1. A method for determining the time of occurrence of an event, said method comprising the steps of:

(a) generating, in response to occurrence of the event, a signal having a parameter whose value varies as a function of time, said signal having an initial value at an initial time;

(b) determining a subsequent value of said parameter at a subsequent time, said subsequent time being a time after said initial time, and

(c) subtracting from said subsequent time, an amount of time calculated substantially according to said function as elapsing between said initial value and said subsequent value to determine the time of said occurrence.

2. Apparatus for determining the time of occurrence of an event, said apparatus comprising:

(a) means for generating, in response to occurrence of the event, a signal having a parameter whose value varies as a function of time, said signal having an initial value at an initial time;

(b) means determining a subsequent value of said parameter at a subsequent time, said subsequent time being a time after said initial time, and

(c) means for subtracting from said subsequent time, an amount of time calculated substantially according to said function as elapsing between said initial value and said subsequent value to determine the time of said occurrence.

3. A method or apparatus according to claim 1 or 2, wherein said function of time is a sloped linear function and said time of occurrence of the event with respect to said initial time is determined substantially in accordance with the equation:

$$T_{init} = T_s - [(V_s - V_i)/S]$$

where:

$T_{init}$ represents said time of occurrence;

$T_s$ represents said subsequent time;

$V_s$ represents said subsequent value;

$V_i$ represents said initial value; and

S represents the slope of said linear function.

4. A method for determining the time of occurrence of an event with respect to a reference time, said method comprising the steps of:

(a) generating a periodic signal defining a plurality of successive sampling periods;

(b) generating, in response to the event, a time-variant signal having a parameter whose value varies as a predetermined function of time, said signal having an initial value at an initial time;

(c) sampling said time-variant signal at the conclusion of one of said sampling periods to determine a subsequent value of said parameter at a subsequent time, said subsequent time being a time after said initial time;

(e) determining the elapsed time between the reference time and said subsequent time based on the number of said sampling periods occurring therebetween, and

(f) subtracting from said elapsed time, an amount of time calculated, based on said subsequent value, as elapsing according to said function between said initial time and said subsequent time to determine a difference representing the time of occurrence of the event with respect to the reference time.

5. Apparatus for determining the time of occurrence of an event with respect to a reference time, said apparatus comprising:

(a) means for generating a periodic signal defining a plurality of successive sampling periods;

(b) means for generating, in response to the event, a time-variant signal having a parameter whose value varies as a predetermined function of time, said time-variant signal having an initial value at an initial time;

(c) means for sampling said time-variant signal at the conclusion of one of said sampling periods to determine a subsequent value of said parameter at a subsequent time, said subsequent time being a time after said initial time;

(e) means for determining the elapsed time between the reference time and said subsequent time based on the number of said sampling periods occurring therebetween, and

(f) means for subtracting from said elapsed time, an amount of time calculated, based on said subsequent value, as elapsing according to said function between said initial time and said subsequent time to determine a difference representing the time of occurrence of the event with respect to the reference time.

6. A method or apparatus according to any one of the preceding claims, further comprising the step of, or means for, effectively subtracting from said time of occurrence any time delay between occurrence of the event and said initial time.

7. Apparatus for determining the time of occurrence of an event, said apparatus comprising:

a transducer for generating a first signal in response to occurrence of the event;

a function generator coupled to said transducer for generating in response to said first signal, a second signal having a parameter whose value varies as a function of time, said second signal having an initial value at an initial time:

a device coupled to said function generator for determining a subsequent value of said parameter at a subsequent time, and

a computer coupled to said device for calculating substantially in accordance with said function, an amount of time elapsing between said initial time and said subsequent time to determine the time of said occurrence.

8. A method for determining the rotational phase of a test rotor with respect to a reference rotor, said method comprising the steps of:

(a) determining a beginning time and a completion time of a rotation of the reference rotor;

(b) determining a time of beginning of a rotation of the test rotor occurring between said beginning time and said completion time of said rotation of said reference rotor; and

(c) determining said rotational phase based on the ratio of the difference between said time of beginning of rotation of said test rotor and said beginning time of said full rotation of said reference rotor to the difference between said completion time and said beginning time of said rotation of said reference rotor, at least one of said determining steps comprising the steps of:

(i) generating, in response to at least one of said rotors being in a predetermined rotational position, a signal having a parameter whose value varies as a function of time, said signal having an initial value at an initial time;

(ii) determining a subsequent value of said parameter at a subsequent time, said subsequent time being a time after said initial time, and

(iii) subtracting from said subsequent time, an amount of time calculated substantially according to said function as elapsing between said initial value and said subsequent value to determine the time of said occurrence.

9. A method for determining the rotational velocity of a test rotor with respect to a reference rotor, said method comprising the steps of:

(a) determining a change in rotational phase of the test rotor with respect to the reference rotor occurring between a first time and a second time, and

(b) determining said rotational velocity based on the ratio of said change in rotational phase to the difference between said second time and said first time, at least one of said first and second times being determined by generating a signal having a parameter which varies as a function of time, said signal having an initial value at said one of said times, determining a subsequent value of said parameter at a subsequent time, and subtracting from said subsequent time an amount of time determined substantially according to said function as elapsing between said initial value and said subsequent value.

FIG. 1

TIRE · 14C · 20C · 21C · 27A · A/D 29 · COMPUTER 31 · UART 32 · 27D · 21D · 20D · 14D · TIRE

10

23C · 27B · FUNCTION GENERATOR · 25 · 27C · 23D

14A · TIRE · 20A · 21A · 23A · 23B · 21B · 20B · 14B · TIRE

11

FIG. 2

*FIG. 3*

```
        ( INITIALIZE UART ) ── 67
                │
        [ SET COUNT=0 ] ── 69
                │
        [ WRITE TWO CHAR.
          OUT OF
          SERIAL PORT ] ── 72
                │
        [ ENABLE INTERRUPTS ] ── 74
                │
        [ DISABLE INTERRUPTS ] ── 76
                │
   NO   < TXRDY =1? > ── 79
                │ YES
        [ SEND CHAR. ] ── 82
                │
        [ COUNT=COUNT+1 ] ── 84
                │
        [ AQUIRE DATA ] ── 87
                │
        [ STORE DATA=
          BUF [COUNT] ] ── 90
                │
   NO   < DONE? > ── 93
                │ YES
        [ ENABLE INTERRUPTS ] ── 95
                │
        [ PROCESS DATA ] ── 97
                │
        [ DISPLAY ] ── 99
                │
        ( END )
```

FIG. 4

EP 0 651 257 A1

European Patent Office

# EUROPEAN SEARCH REPORT

Application Number

EP 94 30 7822

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>Y | US-A-4 651 562 (ERIC DAY)<br>* column 1, line 36 - line 47; figure 1 *<br>--- | 1,2,4,5<br>3,7-9 | G01P3/56<br>G06F17/40 |
| Y | FEINWERKTECHNIK & MESSTECHNIK,<br>vol.89, no.8, 1 December 1981, MÜNCHEN<br>pages 379 - 383<br>H.BUSCHMANN 'PULSABSTANDMESSUNG - EIN<br>VIELSEITIGES MESSVERFAHREN.'<br>* page 379, column 1, line 34 - page 379,<br>column 2, line 11; figures 1,5,11 *<br>--- | 3,7-9 | |
| A | FR-A-2 357 907 (HELIOWATT)<br>* page 3, line 8 - line 20 *<br>* page 4, line 2 - line 31 *<br>* page 15, line 7 - line 32; figures 2,4,5<br>*<br>----- | 1-6 | |

TECHNICAL FIELDS SEARCHED (Int.Cl.6)

G01P
G01D
G06F

The present search report has been drawn up for all claims

| Place of search | Date of completion of the search | Examiner |
|---|---|---|
| THE HAGUE | 21 February 1995 | Hansen, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)